# EUROPÄISCHE PATENTSCHRIFT

(11) **EP 2 753 845 B1**
(45) Veröffentlichungstag und Bekanntmachung des Hinweises auf die Patenterteilung: **25.04.2018**
(21) Anmeldenummer: 12740136.2
(22) Anmeldetag: 24.07.2012
(51) Int. Cl.: F16F 15/131, F16F 15/134

(54) **DREHSCHWINGUNGSDÄMPFERANORDNUNG, INSBESONDERE FÜR DEN ANTRIEBSSTRANG EINES FAHRZEUGS**
TORSIONAL VIBRATION DAMPER ARRANGEMENT, IN PARTICULAR FOR THE DRIVE TRAIN OF A VEHICLE
ENSEMBLE AMORTISSEUR DE VIBRATIONS DE TORSION, EN PARTICULIER POUR LA CHAÎNE CINÉMATIQUE D'UN VÉHICULE AUTOMOBILE

(30) Priorität: 08.09.2011 DE 102011082370
(43) Veröffentlichungstag der Anmeldung: 16.07.2014
(73) Patentinhaber: ZF Friedrichshafen AG, 88046 Friedrichshafen (DE)
(72) Erfinder: SCHIERLING, Bernhard, 97273 Kürnach (DE); TRAUT, Michael, 98693 Ilmenau (DE); FAUSS, Christoph, 97456 Dittelbrunn (DE); MANGER, Alexander, 97508 Grettstadt (DE)
(86) Internationale Anmeldenummer: PCT/EP2012/064540
(87) Internationale Veröffentlichungsnummer: WO 2013/034357

(56) Entgegenhaltungen:
- EP-A1- 1 950 452
- EP-A1- 1 975 456
- DE-A1-102009 039 997
- FR-A1- 2 919 696
- FR-A1- 2 920 845

## Beschreibung

Die vorliegende Erfindung betrifft eine Drehschwingungsdämpferanordnung, insbesondere für den Antriebsstrang eines Fahrzeugs, umfassend wenigstens einen Drehschwingungsdämpfer mit einer Primärseite und einer gegen die Wirkung einer Dämpferelementenanordnung um eine Drehachse bezüglich der Primärseite drehbaren Sekundärseite, wobei die Dämpferelementenanordnung wenigstens eine Dämpferelementeneinheit umfasst und an der Primärseite und der Sekundärseite in Zuordnung zu jedem Umfangsendbereich jeder Dämpferelementeneinheit Umfangsabstützbereiche vorgesehen sind und wobei an einer Seite von Primärseite und Sekundärseite wenigstens bereichsweise entlang der wenigstens einen Dämpferelementeneinheit sich in Umfangsrichtung erstreckend eine Radialabstützfläche zur Radialabstützung der wenigstens einen Dämpferelementeneinheit vorgesehen ist.

Bei in Antriebssträngen von Fahrzeugen eingesetzten Drehschwingungsdämpfern, beispielsweise aufgebaut als Zweimassenschwungrad, werden zum Erhalt einer hohen Entkopplungsgüte Dämpferelementeneinheiten mit vergleichsweise großem Kompressionsweg, also beispielsweise vergleichsweise lange Dämpferfedern oder Gruppen von Dämpferfedern, eingesetzt. Die Folge derart ausgedehnt in Umfangsrichtung sich erstreckender Dämpferelementeneinheiten ist, dass diese einerseits auf Grund ihrer Vorspannung, andererseits fliehkraftbedingt nach radial außen belastet werden. Um eine übermäßige Ausbauchung zu vermeiden, ist es bekannt, beispielsweise die Dämpferelementeneinheiten radial außen umgebend eine Radialabstützfläche anzuordnen, gegen welche die Dämpferelementeneinheiten sich radial anlegen können, insbesondere dann, wenn sie in ihren Umfangsendbereichen an der Primärseite bzw. der Sekundärseite abgestützt und dadurch belastet sind.

Da in einem Antriebsstrang eines Fahrzeugs ein derartiger Drehschwingungsdämpfer im Allgemeinen zwischen zwei rotierenden Baugruppen angeordnet ist, also beispielsweise einer Antriebswelle, wie z.B. Kurbelwelle einer Brennkraftmaschine, und einer Abtriebswelle, also beispielsweise Getriebeeingangswelle oder dergleichen, und da nicht ausgeschlossen werden kann, dass die unter anderem vermittels einer derartigen Drehschwingungsdämpferanordnung zur Drehung gekoppelten Baugruppen auf Grund von allgemein nicht vermeidbaren Montagetoleranzen einen Achsversatz zueinander aufweisen, kann im Bereich einer derartigen Drehschwingungsdämpferanordnung dann, wenn die Primärseite und die Sekundärseite derselben radial bezüglich einander belastet werden, eine Zwängung auftreten, insbesondere wenn die Dämpferelementeneinheiten sich radial bezüglich einer Radialabstützfläche abstützen und in deren Umfangsendbereichen eine Radialrelativbewegung bezüglich der Primärseite einerseits und der Sekundärseite andererseits auf Grund der dort vorhandenen vergleichsweise starken Druckbelastung praktisch nicht möglich ist.

Die FR 2 920 845 A1 betrifft eine Reibungskupplungsvorrichtung mit einem Torsionsschwingungsdämpfer. Zur Begrenzung von radialen Bewegungen der Primärseite gegenüber der Sekundärseite der Reibungskupplungsvorrichtung sind Umfangsabstützbereiche mit einem radialen Spiel J2 zur Primärseite gelagert. Ferner ist an der Sekundärseite eine Anschlagfläche mit einem radialen Spiel J3 gegenüber einer Anschlagfläche der Primärseite angeordnet. Dabei ist J3 kleiner als J2, so dass die Umfangsabstützbereiche nicht an die Primärseite anschlagen können.

Aus der EP 1 975 456 A1 ist ein Torsionsschwingungsdämpfer mit mehreren Federeinheiten vorbekannt. Die Federeinheiten bestehen aus zwei ineinander angeordneten Federn, die jeweils in einem Fenster des Torsionsschwingungsdämpfers angeordnet sind und an ihren Umfangsendbereichen Abstützelemente aufweisen. Durch die Abstützelemente sind die Federn in einem radialen Abstand zur Radialabstützfläche des Fensters gehalten.

Die FR 2 919 696 A1 zeigt eine Vorrichtung zur Übertragung von Drehmoment, wobei der Achsversatz zwischen Primärseite und Sekundärseite durch die Anordnung von Blattfedern kompensiert ist.

Aus der EP 1 950 452 A1 ist ein Torsionsschwingungsdämpfer vorbekannt. Um die Nachteile einer fliehkraftbedingten Radialverlagerung der in dem Torsionsschwingungsdämpfer angeordneten Dämpferelemente zu eliminieren, sind an einem Zentralscheibenelement integral ausgebildete Haltevorsprünge vorgesehen, die die Dämpferelemente in einer definierten radialen Position halten.

Die DE 10 2009 039 997 A1 zeigt einen Drehschwingungsdämpfer, wobei eine Gleitschale vorgesehen ist, die mit ihrem Außendurchmesser am Innendurchmesser einer Primärmasse anliegt und zum Außendurchmesser einer Bogenfeder beabstandet ist.

Es ist die Aufgabe der vorliegenden Erfindung, eine Drehschwingungsdämpferanordnung mit einer verbesserten Möglichkeit der Kompensation eines Achsversatzes auszugestalten.

Erfindungsgemäß wird diese Aufgabe gelöst durch eine Drehschwingungsdämpferanordnung, insbesondere für den Antriebsstrang eines Fahrzeugs, umfassend wenigstens einen Drehschwingungsdämpfer mit einer Primärseite und einer gegen die Wirkung einer Dämpferelementenanordnung um eine Drehachse bezüglich der Primärseite drehbaren Sekundärseite, wobei die Dämpferelementenanordnung wenigstens eine Dämpferelementeneinheit umfasst und an der Primärseite und der Sekundärseite in Zuordnung zu jedem Umfangsendbereich jeder Dämpferelementeneinheit Umfangsabstützbereiche vorgesehen sind und wobei an einer Seite von Primärseite und Sekundärseite wenigstens bereichsweise entlang der wenigstens einen Dämpferelementeneinheit sich in Umfangsrichtung erstreckend eine Radialabstützfläche zur Radialabstützung der wenigstens einen Dämpferelementeneinheit vorgesehen ist, wobei die Primärseite und die Sekundärseite bezüglich einander radial bewegbar sind und wobei wenigstens eine Dämpferelementeneinheit in wenigstens einem ihrer Umfangsendbereiche an dem zugeordneten Umfangsabstützbereich der anderen Seite von Primärseite und Sekundärseite gegen Radialverlagerung gehalten und in Radialabstand zur Radialabstützfläche positioniert abgestützt oder abstützbar ist, wobei wenigstens eine Dämpferelementeneinheit wenigstens eine Dämpferfeder umfasst, wobei in dem wenigstens einen Umfangsendbereich eine Dämpferfeder über ein erstes Abstützelement abgestützt oder abstützbar ist, wobei bei Abstützung an der anderen Seite das erste Abstützelement in Radialabstand zur Radialabstützfläche positioniert und gegen Radialverlagerung gehalten ist.

Wesentlich ist bei der vorliegenden Erfindung, dass grundsätzlich eine Radialbewegbarkeit zwischen der Primärseite und der Sekundärseite eines Drehschwingungsdämpfers zugelassen ist. Dies bedeutet, dass bei Ankopplung der Primärseite einerseits und der Sekundärseite andererseits an mit Achsversatz zueinander positionierten Baugruppen im Rotationszustand permanent eine Radial-Hin-und-Herbewegung der Primärseite bezüglich der Sekundärseite ermöglicht ist. Da weiterhin dafür gesorgt ist, dass in zumindest einem Umfangsendbereich zumindest einer Dämpferelementeneinheit diese Radialbewegungsspiel bezüglich einer grundsätzlich die Dämpferelementeneinheit radial abstützenden Radialabstützfläche aufweist, kann die permanent auftretende radiale Bewegung zwischen Primärseite und Sekundärseite unter entsprechender Verformung einer allgemein in Umfangsrichtung orientiert sich erstreckenden Dämpferelementeneinheit quer zu ihrer Längsachse erfolgen. Hierzu sind wesentlich geringere Kräfte erforderlich, als dies eine auch im Lastzustand auftretende Relativradialverschiebung beispielsweise zwischen der Sekundärseite und einem Umfangsendbereich einer Dämpferelementeneinheit erforderlich machen würde.

Um einen vergleichsweise großen Achsversatz aufnehmen zu können, wird vorgeschlagen, dass der Radialabstand bei zueinander koaxial positionierter Primärseite und Sekundärseite im Bereich von 0,2 bis 1,2 mm liegt.

Eine definierte Radialbewegung zwischen der Primärseite und der Sekundärseite ohne dem Auftreten von zu Zwängungen möglicherweise führenden Relativverschiebungen bezüglich einer Dämpferelementeneinheit gewährleisten zu können, wird vorgeschlagen, dass der wenigstens eine Umfangsendbereich durch Formschluss gegen Radialverlagerung gehalten abgestützt oder abstützbar ist. Hierzu kann vorgesehen sein, dass an einer Baugruppe von Dämpferelementeneinheit und andere Seite von Primärseite und Sekundärseite ein Radialhaltevorsprung und an der anderen Baugruppe eine den Radialhaltevorsprung aufnehmende Radialhalteaussparung vorgesehen sind.

Die Dämpferelementeneinheit umfasst wenigstens eine Dämpferfeder, wobei bei einem einfach zu realisierenden Aufbau vorgesehen sein kann, dass in dem wenigstens einen Umfangsendbereich eine Dämpferfeder direkt an der anderen Seite von Primärseite und Sekundärseite abgestützt oder abstützbar ist.

Um eine gleichmäßige Belastung einer Dämpferfeder an ihrem Umfangsendbereich zu gewährleisten, ist vorgesehen, dass in dem wenigstens einen Umfangsendbereich eine Dämpferfeder über ein erstes Abstützelement an der anderen Seite von Primärseite und Sekundärseite abgestützt oder abstützbar ist, wobei bei Abstützung an der anderen Seite das erste Abstützelement in Radialabstand zur Radialabstützfläche positioniert und gegen Radialverlagerung gehalten ist. An einem derartigen allgemein auch als Gleitschuh bezeichneten ersten Abstützelement können dann beispielsweise auch die zum Erzeugen eines die Haltewechselwirkung gewährleistenden Formschlusses vorzusehenden Formationen realisiert sein.

Bei dem erfindungsgemäßen Aufbau kann weiter vorgesehen sein, dass wenigstens eine Dämpferelementeneinheit eine Mehrzahl von in Umfangsrichtung aufeinander folgenden Dämpferfedern umfasst, wobei in Umfangsrichtung unmittelbar aufeinander folgende Dämpferfedern über ein an der Radialabstützfläche radial abgestütztes oder abstützbares und in Umfangsrichtung entlang der Radialabstützfläche bewegbares zweites Abstützelement aneinander abgestützt sind. Während das oder die zweiten Abstützelemente grundsätzlich an der Radialabstützfläche abgestützt sind und sich gleitreibend entlang dieser bewegen, wenn die Primärseite und die Sekundärseite im Drehmomentübertragungszustand bezüglich einander verdreht werden, ist in dem wenigstens einen Umfangsendbereich die Dämpferelementeneinheit bzw. ein ggf. dort vorgesehenes erstes Abstützelement grundsätzlich in Radialabstand zur Radialabstützfläche gehalten, so dass hier die Radialbewegung zwischen der Primärseite und der Sekundärseite ermöglicht ist.

Um die Entkopplungsgüte der erfindungsgemäßen Drehschwingungsdämpferanordnung weiter verbessern bzw. auf die in einem Antriebsstrang auftretenden Schwingungsanregungen abstimmen zu können, wird vorgeschlagen, dass zwei seriell zueinander wirksame Drehschwingungsdämpfer vorgesehen sind, wobei eine Sekundärseite eines ersten der Drehschwingungsdämpfer eine Primärseite eines zweiten der Drehschwingungsdämpfer bereitstellt oder damit verbunden ist, und wobei bei wenigstens einem der Drehschwingungsdämpfer, vorzugsweise beiden Drehschwingungsdämpfern, wenigstens ein Umfangsendbereich wenigstens einer Dämpferelementeneinheit an dem zugeordneten Umfangsabstützbereich der jeweils anderen Seite von Primärseite und Sekundärseite gegen Radialverlagerung gehalten und in Radialabstand zur jeweiligen Radialabstützfläche an der jeweiligen einen Seite von Primärseite und Sekundärseite positioniert abgestützt oder abstützbar ist. Bei diesem Aufbau kann die Funktionalität des Achsversatzausgleichs auf einen der Drehschwingungsdämpfer konzentriert sein, kann grundsätzlich aber auch jeweils anteilsmäßig in beiden Drehschwingungsdämpfern bereitgestellt sein.

Die konstruktive Ausführung der erfindungsgemäßen Drehschwingungsdämpfungsanordnung kann derart sein, dass die Primärseite oder die Sekundärseite zwei in Axialabstand zueinander angeordnete, miteinander fest verbundene Deckscheibenelemente umfasst und die Sekundärseite oder die Primärseite, vorzugsweise die andere Seite von Primärseite und Sekundärseite, ein wenigstens bereichsweise zwischen den Deckscheibenelementen positioniertes Zentralscheibenelement umfasst.

Ein weiterer Einfluss auf das Schwingungsverhalten eines Antriebsstrangs kann bei dem erfindungsgemäßen Aufbau dadurch erzielt werden, dass an der Primärseite oder/und der Sekundärseite wenigstens eines Torsionsschwingungsdämpfers wenigstens eine Auslenkungsmassenanordnung mit wenigstens einer gegen die Rückstellkraftwirkung einer Federanordnung oder/und gegen die Fliehkraftwirkung aus einer Grund-Relativlage bezüglich eines Auslenkungsmassenträgers auslenkbare Auslenkungsmasse vorgesehen ist. Derartige Auslenkungsmassenanordnungen können als so genannte drehzahladaptive Tilger oder als so genannte Festfrequenztilger ausgebildet sein. Im ersteren Falle bewegt sich die wenigstens eine Auslenkungsmasse im Fliehkraftfeld und wird bei Auftreten von Drehungleichförmigkeiten entgegen der Fliehkraftwirkung nach radial innen gezwungen. Im zweiteren Falle, also bei einem Festfrequenztilger, wird bei Auftreten von Drehungleichförmigkeiten die wenigstens eine Auslenkungsmasse gegen die Rückstellkraftwirkung einer Federanordnung, beispielsweise einer oder mehrerer Schraubendruckfedern, ausgelenkt.

Um weiter dafür sorgen zu können, dass auch dann, wenn die Primärseite und die Sekundärseite auf Grund eines vergleichsweise geringen zu übertragenden Drehmoments in einer oder nahe einer Grund-Relativdrehlage bezüglich einander sind, also im Wesentlichen nicht bezüglich einander in Drehbewegung ausgelenkt sind, eine Achsialversatzkompensation möglich ist, wird vorgeschlagen, dass in einer Grund-Relativdrehlage der Primärseite und der Sekundärseite bezüglich einander die wenigstens eine Dämpferelementeneinheit der Dämpferelementenanordnung nur bezüglich der Primärseite oder nur bezüglich der Sekundärseite abgestützt ist.

Die vorliegende Erfindung betrifft ferner ein Antriebssystem für ein Fahrzeug mit einer erfindungsgemäß aufgebauten Drehschwingungsdämpferanordnung. Dabei kann weiter vorgesehen sein, dass auch zum Ausgleich von Achsneigungen, also nicht exakt parallel zueinander ausgerichteten Drehachsen, eine Primärseite eines Drehschwingungsdämpfers zur Ankopplung an ein Antriebsorgan mit einem elastischen, vorzugsweise taumelelastischen, Verbindungselement verbunden ist.

Weiter kann dazu vorgesehen sein, dass die Sekundärseite eines Drehschwingungsdämpfers zur Ankopplung an ein Abtriebsorgan mit einem elastischen, vorzugsweise taumelelastischen, Verbindungselement verbunden ist.

Die Sekundärseite eines Drehschwingungsdämpfers kann mit dem Eingangsbereich einer Reibungskupplung verbunden sein. Es ist hier darauf hinzuweisen, dass diese Reibungskupplung als Trockenreibungskupplung, beispielsweise auch als Doppelkupplung oder Zweischeibenkupplung, ausgebildet sein kann, ebenso wie als nasslaufende Reibungskupplung, also beispielsweise nasslaufende Lamellenkupplung.

Weiter kann die Sekundärseite eines Drehschwingungsdämpfers bei dem erfindungsgemäßen Antriebssystem mit einem Eingangsbereich eines Hybridantriebsmoduls verbunden sein.

Die vorliegende Erfindung wird nachfolgend mit Bezug auf die beiliegenden Figuren detailliert beschrieben. Es zeigt:
- Fig. 1: eine Längsschnittansicht eines in einen Antriebsstrang eines Fahrzeugs einzugliedernden Antriebssystems;
- Fig. 2: eine Axialansicht einer Drehschwingungsdämpferanordnung des Antriebssystems der Fig. 1;
- Fig. 3: eine vergrößerte Detailansicht der in Fig. 2 dargestellten Drehschwingungsdämpferanordnung;
- Fig. 4: eine Axialansicht einer Drehschwingungsdämpferanordnung des Antriebssystems der Fig. 1;
- Fig. 5: eine vergrößerte Detailansicht der in Fig. 4 dargestellten Drehschwingungsdämpferanordnung;
- Fig. 6: eine Axialansicht einer Drehschwingungsdämpferanordnung des Antriebssystems der Fig. 1;
- Fig. 7: eine vergrößerte Detailansicht der in Fig. 6 dargestellten Drehschwingungsdämpferanordnung;
- Fig. 8: eine Axialansicht einer Drehschwingungsdämpferanordnung des Antriebssystems der Fig. 1;
- Fig. 9: eine vergrößerte Detailansicht der in Fig. 8 dargestellten Drehschwingungsdämpferanordnung;
- Fig. 10: eine Längsschnittansicht einer alternativen Ausgestaltungsform eines Antriebssystems;
- Fig. 11: eine Längsschnittansicht einer alternativen Ausgestaltungsform eines Antriebssystems;
- Fig. 12: eine Längsschnittansicht einer alternativen Ausgestaltungsform eines Antriebssystems.

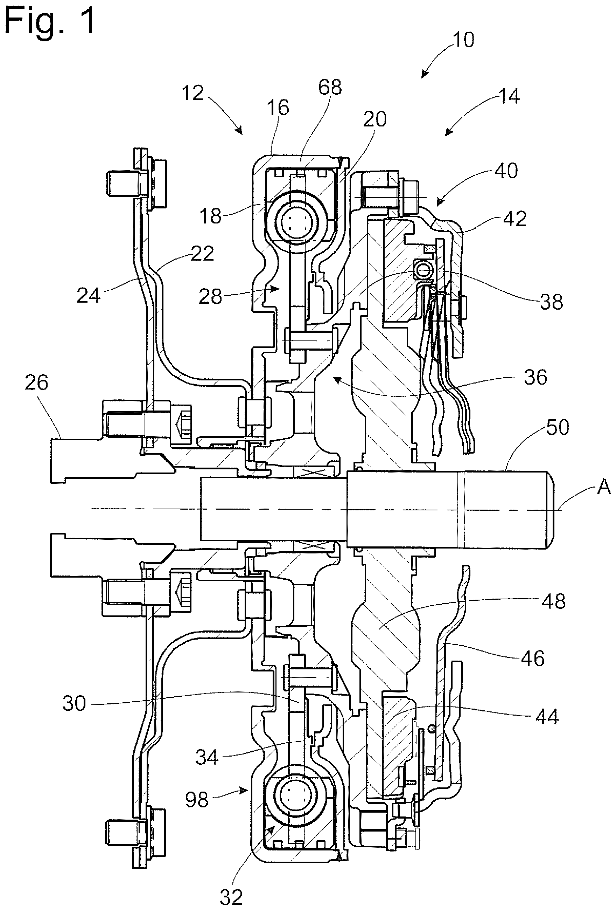

In Fig. 1 ist ein in den Antriebsstrang eines Fahrzeugs integrierbares Antriebssystem allgemein mit 10 bezeichnet. Dieses umfasst als wesentliche Bestandsteile eine Drehschwingungsdämpferanordnung 12 und im Drehmomentenfluss zwischen einem Antriebsaggregat und einem Getriebe darauf folgend eine Reibungskupplung 14, hier ausgebildet als Einscheiben-Trockenreibungskupplung.

Die Drehschwingungsdämpferanordnung 12 umfasst eine Primärseite 16 mit zwei in axialem Abstand zueinander angeordneten Deckscheibenelementen 18, 20. Das Deckscheibenelement 18 ist radial außen axial abgekrümmt und an seinem axial freien Endbereich beispielsweise durch Verschweißung mit dem Deckscheibenelement 20 verbunden. Diese Primärseite 16 ist im Bereich des Deckscheibenelements 18 mit einem Distanz-Verbindungselement 22 beispielsweise durch Vernietung verbunden. Das Distanz-Verbindungselement 22 ist in seinem radial äußeren Bereich beispielsweise durch Verschraubung oder Vernietung oder dergleichen mit einem allgemein als Flexplatte bezeichneten, insbesondere axial bzw. taumelastisch ausgebildeten Verbindungselement 24 fest verbunden. Dieses wiederum ist in in seinem radial inneren Bereich durch Verschraubung mit einem Antriebsorgan 26, beispielsweise der Kurbelwelle einer Brennkraftmaschine, zur gemeinsamen Drehung um eine Drehachse A fest verbunden.

Eine Sekundärseite 28 der Drehschwingungsdämpferanordnung 12 umfasst ein zwischen die beiden Deckscheibenelemente 18, 20 eingreifendes Zentralscheibenelement 30. Dieses weist zur Drehmomentübertragungswechselwirkung mit einer Dämpferelementenanordnung 32 eine Mehrzahl von nach radial außen greifenden Abstützarmen 34 auf. Radial innen ist das Zentralscheibenelement 30 beispielsweise durch Vernietung mit einem Eingangsbereich 36 der Reibungskupplung 14 verbunden. Dieser Eingangsbereich 36 kann ein Schwungrad 38 umfassen, an welchem eine Druckplatte 40 der Reibungskupplung 14 festgelegt ist. Die Druckplatte 40 umfasst eine in einem Kupplungsgehäuse 42 drehfest, jedoch axial bewegbar gehaltene Anpressplatte 44, die unter der Wirkung eines Kraftspeichers bzw. allgemein einer Kraftbeaufschlagungsanordnung 46 gegen die Reibbeläge einer nur schematisch dargestellten Kupplungsscheibe 48 pressbar ist. Die Kupplungsscheibe 48 ist in ihrem radial inneren Bereich beispielsweise durch Verzahnungseingriff mit einem Abtriebsorgan 50, beispielsweise einer Getriebeeingangswelle, zur gemeinsamen Drehung um die Drehachse A gekoppelt.

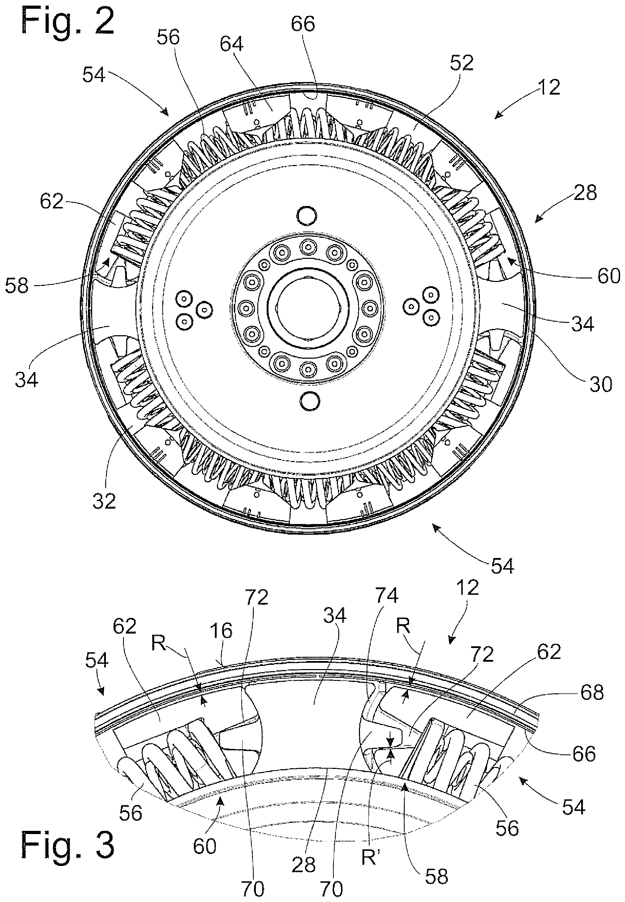

Der Aufbau der Dämpferelementenanordnung 32 bzw. der Drehschwingungsdämpfungsanordnung 12, welche in dieser Variante einen Drehschwingungsdämpfer 98 umfasst, wird nachfolgend mit Bezug auf die Fig. 2 und 3 detaillierter beschrieben.

Man erkennt in Fig. 2 die beiden nach radial außen greifenden Abstützarme 34 der Sekundärseite 28 bzw. des Zentralscheibenelements 30. In den in Umfangsrichtung zwischen den beiden Abstützarmen 34 in einer durch die beiden Deckscheibenelemente 18, 20 begrenzten und beispielsweise mit viskosem Medium befüllten Kammer 52 liegen zwei zueinander vorzugsweise identisch aufgebaute Dämpferelementeneinheiten 54 der Dämpferelementenanordnung 32. Jede Dämpferelementeneinheit 54 umfasst eine Mehrzahl von in Umfangsrichtung aufeinander folgenden Dämpferfedern 56, wobei ein Teil der oder alle Dämpferfedern 56 mit ineinander geschachtelt angeordneten Federn, beispielsweise Schraubendruckfedern, ausgebildet sein können.

In ihren Umfangsendbereichen 58, 60 sind die Dämpferelementeneinheiten 54 über als erste Abstützelemente wirksame Federteller 62 an den Abstützarmen 34 abgestützt. In ihren in Umfangsrichtung aneinander angrenzenden Bereichen sind die Dämpferfedern 56 über als zweite Abstützelemente wirksame Gleitschuhe 64 aneinander abgestützt. Durch die Fliehkrafteinwirkung und auch die vorgespannte Einbaulage der Dämpferfedern 56 sind die Gleitschuhe 64 grundsätzlich nach radial außen vorbelastet und stützen sich an einer Radialabstützfläche 66 ab, die an dem axial sich erstreckenden und das Deckscheibenelement 20 tragenden Abschnitt 68 der Primärseite 16 bzw. des Deckscheibenelements 18 an einer radialen Innenseite gebildet ist. Unabhängig von der konkreten konstruktiven Ausführung ist die Radialabstützfläche 66 grundsätzlich die Dämpferelementeneinheiten 54 radial außen umgebend angeordnet, so dass bei konstruktiv einfacher Ausführung eine Radialabstützwirkung für die Dämpferelementeneinheiten 54 realisiert werden kann.

Ebenso wie die Sekundärseite 28 im Bereich der Abstützarme 34, weist auch die Primärseite 16 im Bereich der Deckscheibenelemente 18, 20 in den Fig. 2 und 3 jedoch nicht dargestellte Abstützabschnitte auf, an welchen die Dämpferelementeneinheiten 54, insbesondere die Federteller 62, sich in Umfangsrichtung abstützen können. Je nach Drehmomenteinleitungsrichtung, also abhängig davon, ob ein Zugzustand oder Schubzustand vorliegt, stützt sich der Umfangsendbereich 58 an der Primärseite 16, also einem jeweils zugeordneten Abstützabschnitt der Deckscheibenelemente 18, 20, oder an einem zugeordneten Abstützarm 34 der Sekundärseite 28 ab. Der andere Umfangsendbereich 60 stützt sich dann entsprechend jeweils an der anderen Seite von Primärseite 16 und Sekundärseite 28 ab.

In einer Einbausituation ist grundsätzlich davon auszugehen, dass die beiden zur Drehung miteinander vermittels der Drehschwingungsdämpfungsanordnung 12 zu koppelnden Baugruppen, also das Antriebsorgan 26 und das Abtriebsorgan 50, nicht um identische Drehachsen rotieren. Es wird im Allgemeinen nicht zu vermeiden sein, dass ein zumindest geringfügiger Versatz der beiden Drehachsen vorliegt, so dass die in Fig. 1 erkennbare Drehachse A nur als Idealfall für eine praktisch nahezu nicht erreichbare Ausrichtung zu betrachten ist. Um diesen Achsversatz insbesondere auch bei eingerückter Reibungskupplung 14 ausgleichen zu können ist die Drehschwingungsdämpferanordnung 12 grundsätzlich derart aufgebaut, dass die Primärseite 16 und die Sekundärseite 28 sich in einem vorbestimmten Ausmaß, beispielsweise im Bereich von 0,2 mm bis 1,2 mm, radial bezüglich einander bewegen können. Dies kann beispielsweise auch durch entsprechende spielbehaftete Ausgestaltung von diese beiden Baugruppen grundsätzlich lagernden Elementen realisiert sein. Im Rotationsbetrieb wird somit eine ständige Relativ-Radial-Hin-und-Herbewegung der Primärseite 16 bezüglich der Sekundärseite 28 stattfinden.

Um dies weiter zu ermöglichen, sind die Umfangsendbereiche 58, 60 der Dämpferelementeneinheiten 54, also diejenigen Bereiche, die zur Drehmomentübertragung bezüglich der Primärseite 16 und der Sekundärseite 28 abgestützt bzw. abstützbar sind, mit einem Radialabstand R zur Radialabstützfläche 66 gehalten. Hierzu sind, wie die Fig. 3 dies deutlich zeigt, an den Abstützarmen 34 des Zentralscheibenelements 30 näherungsweise in Umfangsrichtung sich erstreckende Radialhaltevorsprünge 70 vorgesehen, welche in zugeordnete Radialhalteaussparungen 72 der Federteller 62 eingreifen. Dabei sind beispielsweise die Radialhaltevorsprünge 70 derart ausgebildet, dass dann, wenn bei Relativdrehung zwischen der Primärseite 16 und der Sekundärseite 28 ein Radialhaltevorsprung 70 in Richtung aus der zugeordneten Radialhalteaussparung 72 herausbewegt, dies ist in dem in Fig. 3 rechts dargestellten Radialtevorsprung 70 der Fall, ein Radialabstand R' zwischen diesem Radialhaltevorsprung 70 und einer die Radialhalteaussparung 72 umgebenden Oberfläche des Federtellers 62 entsteht. Dieser Federteller 62 ist an einem zugeordneten Abstützabschnitt 74 des Deckscheibenelements 18 bzw. des Deckscheibenelements 20 abgestützt, während der in Umfangsrichtung unmittelbar folgende Federteller einer anderen Dämpferelementeneinheit 54 an dem Abstützarm 34 in Umfangsrichtung abgestützt ist und durch Wechselwirkung mit dem zugeordneten Radialhaltevorsprung 70 gegen Bewegung nach radial außen arretiert ist.

In diesem Zustand ist durch das Bereitstellen insbesondere des Radialabstands R zwischen den Federtellern 62 und der Radialabstützfläche 66 dafür gesorgt, dass die an dem Abstützarm 34 sich abstützende Dämpferelementeneinheit 54, also in der Fig. 3 die links dargestellte Dämpferelementeinheit 54, durch seitliche Verbiegung der mit dem Federteller 62 unmittelbar zusammenwirkenden Dämpferfeder 56 eine Radialbewegung der Sekundärseite 28 bezüglich der Primärseite 16 im Wesentlichen nicht behindert. Das Entstehen von Zwängungen bei einer Radialverschiebung zwischen der Primärseite 16 und der Sekundärseite 28 dort, wo diese mit den Dämpferelementeneinheiten 54 zusammenwirken, wird somit verhindert.

Um auch in einem Zustand, in welchem auf Grund eines vergleichsweise geringen zu übertragenden Drehmoments die Primärseite 16 und die Sekundärseite 28 in ihrer Grund-Relativdrehlage bezüglich einander positioniert sind, eine Relativradialbewegung dieser beiden Baugruppen ohne der Entstehung von Zwängungen bzw. übermäßig starker Reibeffekte zu gewährleisten, indem die an einem Abstützarm 34 sich abstützenden Dämpferelementeneinheiten 54 ein seitliches Abbiegen der endständigen Dämpferfedern 56 zulassen, kann vorgesehen sein, dass die Umfangserstreckung eines Abstützarms 34 dort, wo er mit den beiden Federtellern 62 zweier Dämpferelementeneinheiten 54 zusammenwirkt, größer ist, als die Umfangserstreckung der Abstützabschnitte an den Deckscheibenelementen 18, 20, also beispielsweise des in Fig. 3 erkennbaren Abstützabschnitts 74. Die Folge davon ist, dass im unbelasteten oder vergleichsweise gering belasteten Zustand die Dämpferelementeneinheiten 54 sich in Umfangsrichtung im Wesentlichen nur an den Abstützarmen 34, also der Sekundärseite 28 abstützen, bezüglich den entsprechenden Abstützabschnitten der Primärseite 16, also der Deckscheibenelemente 18, 20, jedoch keine Abstützwechselwirkung und mithin auch im Wesentlichen keine Reibwechselwirkung besteht. Auch in diesem Zustand kann dann die Sekundärseite 28 unter entsprechender Radialmitnahme der Umfangsendbereiche 58, 60 der Dämpferelementeneinheiten 54, ohne dass diese Umfangsendbereiche 58, 60 sich gleichzeitig auch reibblockiert an der Primärseite 16 abstützen, eine Radialbewegung bezüglich der Primärseite 16 ausführen. Grundsätzlich könnte auch vorgesehen sein, dass die an den Deckscheibenelementen 18, 20 vorgesehenen Abstützabschnitte eine größere Umfangserstreckung aufweisen, als die Abstützarme 34, so dass im nicht belasteten Zustand die Federteller 62 bzw. die Dämpferelementeneinheiten 54 an den Abstützabschnitten der Primärseite 16 abgestützt sind, bezüglich den Abstützarmen 34 jedoch einen geringen Umfangsabstand aufweisen. Auch dies ermöglicht eine zwängungsfreie Relativradialbewegung zwischen der Primärseite 16 und der Sekundärseite 28, wozu bei Vorhandensein der Radialhaltevorsprünge 70 bzw. Radialhalteaussparungen 72 vorteilhafterweise dann der Radialabstand R' vorhanden ist, um hier eine Entkopplung zwischen der Sekundärseite 28 und den Gleitschuhen 62 zu erreichen. Bei Relativverdrehung treten dann die Radialhaltevorsprünge 70 in Radialhaltewechselwirkung mit den Federtellern 62 und erzeugen die Radialhaltefunktionalität zum Beibehalten des Radialabstands R zur Radialabstützfläche 66.

Es ist darauf hinzuweisen, dass die radiale Halterung der Dämpferelementeneinheiten 54 an den Abstützarmen 34 selbstverständlich auch in anderer Weise realisiert sein könnte. So könnten beispielsweise an den Federtellern 62 Radialhaltevorsprünge und an den Abstützarmen 34 Radialhalteaussparungen vorgesehen sein. Auch ist es möglich, die Dämpferelementeneinheiten 54 ohne die Zwischenlagerung der Federteller 64 unmittelbar an den Abstützarmen 34 abzustützen, wobei dann beispielsweise die Radialhaltevorsprünge 70 zur Erzeugung der Radialhaltefunktion in die letzte Windung oder die letzten Windungen der Dämpferfedern 56 eingreifen könnten. Von Bedeutung ist jedoch, dass im Wesentlichen unabhängig vom Lastzustand dafür gesorgt wird, dass der Radialabstand R zwischen den Umfangsendbereichen 58, 60 und der Radialabstützfläche 66 vorhanden ist.

Weiter ist es selbstverständlich möglich, die Dämpferelementeneinheiten 54 mit anders gestalteten Dämpferfedern, beispielsweise auch nur mit einer einzigen, gekrümmt eingebaut und über nahezu 180° sich erstreckenden Feder, auszugestalten. Diese kann in ihrem wesentlichen Erstreckungsbereich sich nach radial außen gegen die Radialabstützfläche 66 anlegen und kann zur Ermöglichung der Relativradialbewegung ohne Reibzwängungen in ihren Umfangsendbereichen in Radialabstand zu dieser Radialabstützfläche gehalten sein.

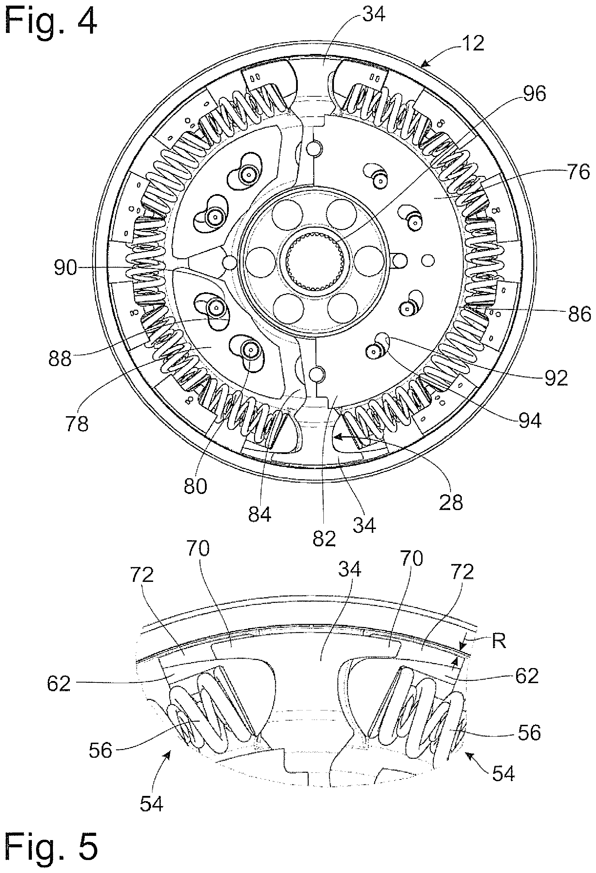

Eine alternative Ausgestaltungsform der Drehschwingungsanordnung 12 ist in den Fig. 4 und 5 gezeigt. Hier sind Komponenten bzw. Baugruppen, welche hinsichtlich Aufbau bzw. Funktion vorangehend beschriebenen bzw. dargestellten Komponenten bzw. Baugruppen entsprechen, mit den gleichen Bezugszeichen bezeichnet.

Man erkennt zunächst in Fig. 5, dass die im Bereich eines Abstützarms 34 bereitgestellten Radialhaltevorsprünge 70 weiter radial außen liegen und in nach radial außen offene, nutartige Radialhalteaussparungen 72 der Federteller 62 eingreifen, diese im Wesentlichen also an ihrer radialen Außenseite übergreifen. Weiter erkennt man in der Darstellung der Fig. 4, dass beispielsweise nur bei einem einzigen der beiden hier vorhandenen Abstützarme 34 für diese Radialhalterung gesorgt ist, was bereits eine Minderung der im Falle der Relativradialbewegung zwischen Primärseite 16 und Sekundärseite 28 vorhandenen Zwängungen bzw. Reibeffekte bewirkt. Idealerweise sind bei beiden bzw. allen Abstützarmen 34 die vorangehend erläuterten Maßnahmen zum Herstellen des Radialabstands R getroffen.

Bei der in den Fig. 4 und 5 gezeigten Ausgestaltungsform ist an der Sekundärseite 28 eine in Form eines drehzahladaptiven Tilgers ausgebildete Auslenkungsmassenanordnung 76 vorgesehen. Diese umfasst eine Mehrzahl von, hier vier, Auslenkungsmassen 78, welche durch jeweils zwei bolzenartige Kopplungselemente 80 an einem zwei in Axialabstand gehaltene Scheiben 82, 84 umfassenden Auslenkungsmassenträger 86 gehalten sind. An den Auslenkungsmassen 80 sind in langlochartigen, gekrümmten Öffnungen in Zuordnung zu den Kopplungselementen 80 Führungsbahnen 88 mit radial innen liegendem Scheitelbereich 90 vorgesehen. Entsprechend sind am Auslenkungsmassenträger 86, also den Scheiben 82, 84, in langlochartigen gekrümmten Aussparungen Führungsbahnen 92 mit radial außen liegendem Scheitelbereich 94 vorgesehen. Bei Fliehkraftbelastung werden die Kopplungselemente 80 in den beiden Scheitelbereichen 90 bzw. 94 jeweils einander zugeordneter Führungsbahnen 88, 92 eines jeweiligen Kopplungselements 80 positioniert sein. Bei Auftreten von Drehungleichförmigkeiten und entsprechender Umfangsbeschleunigung der Auslenkungsmassen 78 bewegen sich die Kopplungselemente 80 in Umfangsrichtung entlang der jeweils zugeordneten Führungsbahnen 88, 92 aus den Scheitelbereichen 90, 94 heraus, was zu einer Zwangsverlagerung der Auslenkungsmassen 78 nach radial innen und somit der Aufnahme potentieller Energie in diesen führt. Die Auslenkungsmassen 78 können somit im Fliehpotential eine Oszillationsbewegung bezüglich des Auslenkungsmassenträgers 86 durchführen, um somit eine einer anregenden Schwingung entgegen wirkende Schwingung aufzubauen. Da das Schwingungsverhalten bzw. die Eigenfrequenz des so erhaltenen Schwingungssystems von der Fliehkraft und mithin der Drehzahl abhängt, wird es möglich, eine Schwingungsabstimmung auf eine bestimmte anregende Ordnung, beispielsweise die Zündfrequenz einer Brennkraftmaschine, zu erreichen, so dass mit variierender Drehzahl die Eigenfrequenz des so aufgebauten Schwingungssystems sich entsprechend mit der anregenden Ordnung verschiebt.

Obgleich es besonders vorteilhaft ist, eine derartige Auslenkungsmassenanordnung 76 an der Sekundärseite, also beispielsweise dem Zentralscheibenelement 30, festzulegen, könnte grundsätzlich auch an der Primärseite 16 alternativ oder zusätzlich eine derartige Auslenkungsmassenanordnung vorgesehen sein. Weiter wird darauf hingewiesen, dass eine derartige Auslenkungsmassenanordnung auch als so genannter Festfrequenztilger ausgebildet sein könnte. Dabei bewegen die Auslenkungsmassen sich im Wesentlichen gegen die Rückstellwirkung einer elastischen Anordnung, also beispielsweise von Schraubendruckfedern. Durch die Auswahl der Massenverhältnisse einerseits und der Federkonstanten andererseits wird hier eine Abstimmung auf eine vorgegebene, grundsätzlich aber nicht variierbare Frequenz erreicht.

Weiter erkennt man in Fig. 4, dass die Sekundärseite 28 in ihrem radial inneren Bereich mit einer mit Innenverzahnung versehenen Nabe 96 ausgebildet ist. Diese könnte also unmittelbar auf eine weiterführende Welle, beispielsweise eine Getriebeeingangswelle oder eine Zwischenwelle aufgeschoben und damit zur gemeinsamen Drehung gekoppelt werden.

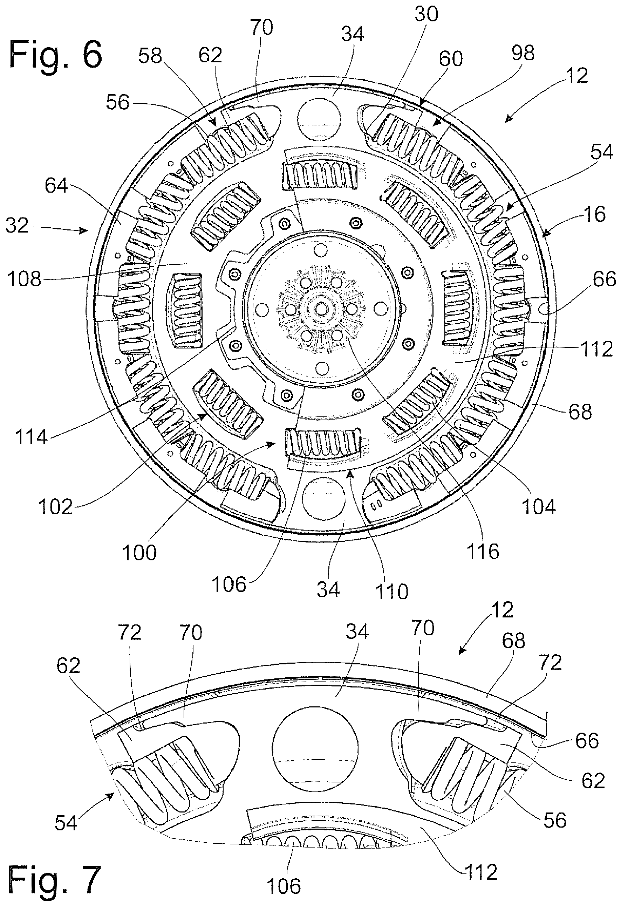

Eine weitere alternative Ausgestaltungsvariante ist in den Fig. 6 und 7 dargestellt. Auch hier sind Komponenten bzw. Baugruppen, welche vorangehend beschriebenen Komponenten bzw. Baugruppen entsprechen, mit den gleichen Bezugszeichen bezeichnet.

Bei dieser Ausgestaltungsform der Drehschwingungsanordnung 12 sind zwei seriell zueinander wirksame Drehschwingungsdämpfer 98 und 100 vorgesehen. Dabei ist im Wesentlichen der Drehschwingungsdämpfer 98 so aufgebaut, wie vorangehend beschrieben, mit einer Primärseite 16 mit den beiden beispielsweise in Fig. 1 erkennbaren Deckscheibenelementen 18, 20 und dem die Radialabstützfläche 66 bereitstellenden Abschnitt 68, der in der Sekundärseite das Zentralscheibenelement 30 mit den Abstützarmen 34 und den daran vorgesehenen Radialhaltevorsprüngen 70 umfasst. Diese sind hier beispielsweise die Federteller 62 bzw. die Umfangsendbereiche 58, 60 der Dämpferelementeneinheiten 54 radial außen übergreifend ausgebildet. Auch hier könnten selbstverständlich wieder beide Abstützarme 34 zueinander identisch ausgebildet sein.

Der zweite, radial weiter innen positionierte Drehschwingungsdämpfer 100 umfasst gleichermaßen eine Dämpferelementenanordnung 102 mit einer Mehrzahl von in Umfangsrichtung aufeinander folgenden Dämpferelementeneinheiten 104, hier jede umfassend eine einzige Dämpferfeder 106. Eine Primärseite 108 des radial inneren, zweiten Torsionsschwingungsdämpfers 100 ist im Wesentlichen bereitgestellt durch den radial inneren Bereich des Zentralscheibenelements 30, in welchem Aussparungen zur Aufnahme und Umfangsabstützung der Dämpferfedern 106 gebildet sind. D.h., die Sekundärseite 28 des radial äußeren, ersten Drehschwingungsdämpfers 98 stellt im Wesentlichen auch die Primärseite 108 des weiter radial innen liegenden zweiten Drehschwingungsdämpfers 100 bereit.

Eine Sekundärseite 110 des zweiten Drehschwingungsdämpfers 100 umfasst zwei Deckscheibenelemente, von welchen in Fig. 6 nur das Deckscheibenelement 112 an einer Axialseite des Zentralscheibenelements 30 in Teilansicht erkennbar ist. Das andere dieser beiden Deckscheibenelemente liegt in dieser Darstellung hinter dem Zentralscheibenelement 30. In ihrem radial inneren Bereich sind die beiden Deckscheibenelemente der Sekundärseite 100 miteinander und mit einer Nabe 114 beispielsweise durch Vernietung fest verbunden. An dieser Nabe 114 ist zur Kopplung mit einer weiterführenden Baugruppe eine Hirthverzahnung 116 ausgebildet. Hier könnte selbstverständlich auch die beispielsweise in Fig. 4 erkennbare Innenumfangsverzahnung realisiert sein.

Bei der mit zwei seriell wirksamen und beispielsweise radial gestaffelt liegenden Drehschwingungsdämpfern 98, 100 aufgebauten Drehschwingungsdämpferanordnung 12 kann die Funktionalität des Radialversatzausgleichs zweier Drehachsen beispielsweise in nur einen der Drehschwingungsdämpfer 98, 100, also beispielsweise den radial äußeren Drehschwingungsdämpfer 98 integriert sein, so dass dessen Sekundärseite 28 sich bezüglich dessen Primärseite 16 radial bewegen können muss und für die vorangehend detailliert erläuterte Beabstandung zur Radialabstützfläche 66 zu sorgen ist. Selbstverständlich könnte alternativ oder zusätzlich auch der radial innere der beiden Drehschwingungsdämpfer 98, 100 entsprechend aufgebaut sein. Auch dort sind in Zuordnung zu den Dämpferfedern 106 der Dämpferfedereinheiten 104 diese nach radial außen abstützenden Flächen insbesondere an den Deckscheibenelementen vorgesehen. Durch entsprechende Ausgestaltung mit Radialbeabstandung und Radialhalteformationen beispielsweise am Zentralscheibenelement 30, also an der Primärseite 108, kann auch hier bei entsprechender Radialbewegbarkeit zwischen der Primärseite 108 und der Sekundärseite 110 für eine den Radialversatz zulassende Ausgleichsbewegung ohne dem Entstehen von Zwängungen gesorgt werden.

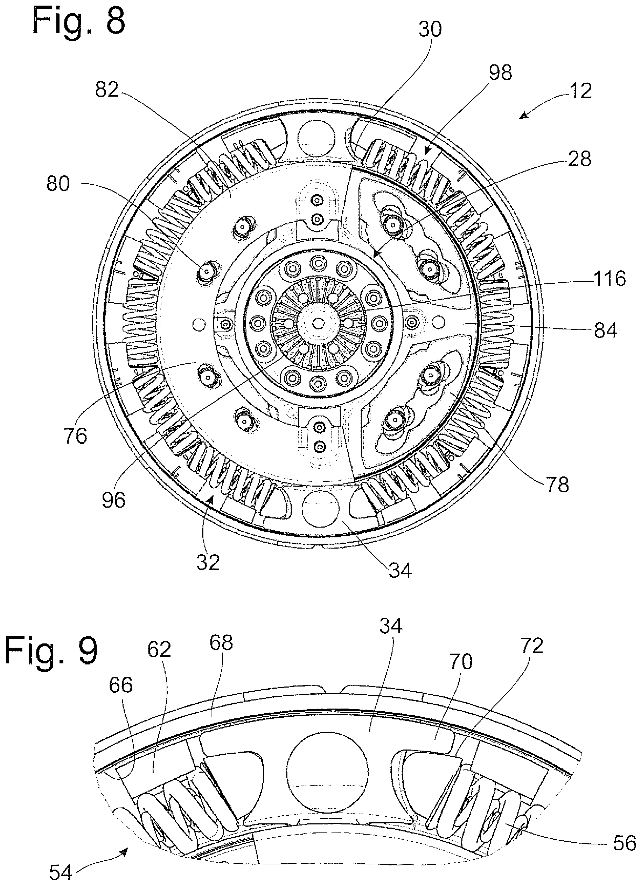

Die Fig. 8 und 9 zeigen eine Ausgestaltungsform, welche der in den Fig. 4 und 5 gezeigten Ausgestaltungsform ähnlich ist. Auch hier ist mit der Sekundärseite 28 der mit einem einzigen Drehschwingungsdämpfer 98 aufgebauten Drehschwingungsdämpferanordnung 12 eine Auslenkungsmassenanordnung 76 mit beispielsweise vier in Umfangsrichtung verteilt liegenden Auslenkungsmassen 78 vorgesehen. Im radial inneren Bereich ist die Sekundärseite 28 beispielsweise durch Festlegung des Zentralscheibenelements 30 an einer Nabe 114, mit einer Hirthverzahnung 116 ausgebildet, um eine Ankopplung an eine im Drehmomentenfluss folgende Baugruppe zu ermöglichen.

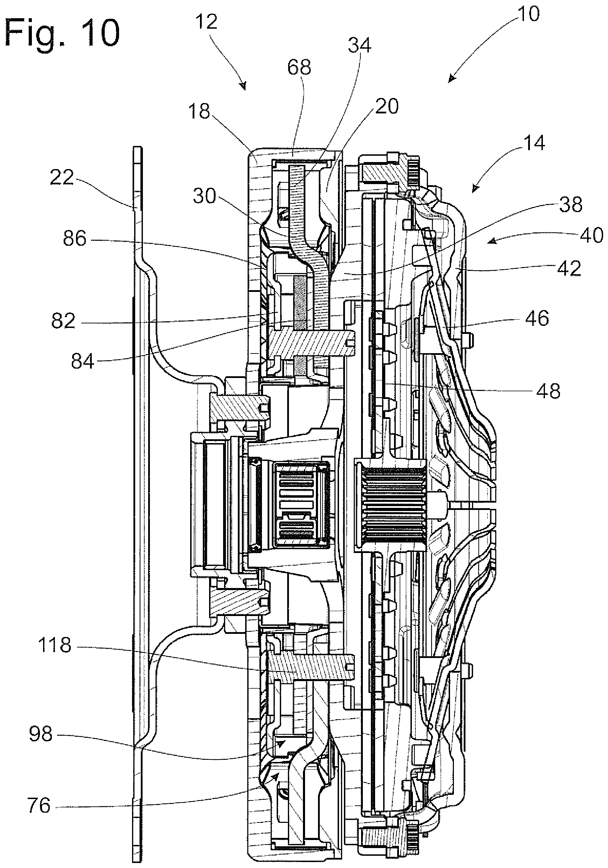

Die Fig. 10 zeigt im Längsschnitt in einer der Fig. 1 entsprechenden Art und Weise ein Antriebssystem 10 mit einer Drehschwingungsdämpferanordnung 12 mit einem einzigen Drehschwingungsdämpfer 98 und einer Reibungskupplung 14. Man erkennt das durch eine Mehrzahl von Bolzenelementen 118 an das Schwungrad 38 angebundene Zentralscheibenelement 30. Zusammen mit dem Zentralscheibenelement 30 sind die beiden Scheiben 82, 84 des Auslenkungsmassenträgers 86 an das Schwungrad 38 angebunden. Axial zwischen diesen beiden Scheiben 82, 84 liegen die in Fig. 10 nicht erkennbaren Auslenkungsmassen.

Die Kupplungsscheibe 48 der Reibungskupplung 14 ist hier im Wesentlichen starr ausgebildet, weist also keine zur Drehschwingungsdämpfung beitragende Baugruppen auf.

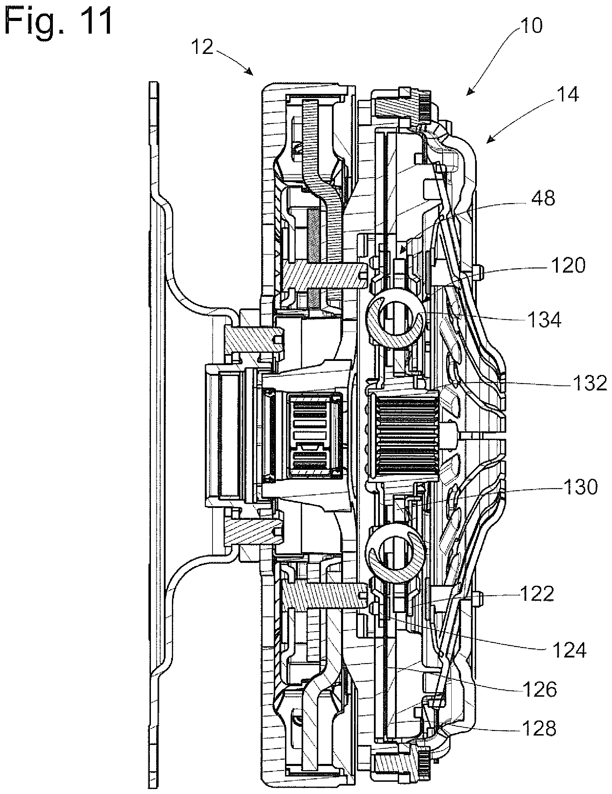

In dem in Fig. 11 dargestellten Ausgestaltungsbeispiel, welches im Wesentlichen dem in Fig. 10 dargestellten Ausgestaltungsbeispiel entspricht, ist die Kupplungsschiebe 48 der Reibungskupplung 14 selbst mit einer weiteren Drehschwingungsdämpferanordnung 120 aufgebaut. Diese beispielsweise mit einem oder auch zwei seriellen Drehschwingungsdämpfern ausgebildete Drehschwingungsdämpferanordnung 120 umfasst als Primärseite zwei in Axialabstand zueinander gehaltene und miteinander fest verbundene Deckscheibenelemente 122 und 124, die über einen Reibbelagträger 126 mit den Reibbelägen 128 der Kupplungsscheibe 48 verbunden sind. Eine Sekundärseite umfasst ein Zentralscheibenelement 130, das mit seinem radial äußeren Bereich zwischen die beiden Deckscheibenelemente 122, 124 eingreift und radial innen mit einer Nabe 132 zur Drehankopplung an eine Welle, beispielsweise Getriebeeingangswelle, ausgebildet ist. Eine Dämpferelementenanordnung 134 umfasst beispielsweise zwei oder mehrere Dämpferelementeneinheiten mit Dämpferfedern, die sich in Umfangsrichtung bezüglich der Primärseite, also der beiden Deckscheibenelemente 122, 124, einerseits und bezüglich der Sekundärseite, also des Zentralscheibenelements 130, andererseits abstützen können.

Auch in dieser weiteren Drehschwingungsdämpferanordnung 120 können zum Integrieren eine den Achsversatz beispielsweise einer Antriebswelle und einer Getriebeeingangswelle ausgleichende Maßnahmen, wie sie vorangehend erläutert wurden, vorgesehen sein. D.h., grundsätzlich könnte die weitere Drehschwingungsdämpferanordnung 120 so ausgebildet sein, wie vorangehend detailliert erläutert, so dass eine den Achsversatz kompensierende Funktionalität bereits oder ggf. auch ausschließlich in die Reibungskupplung 14 integriert werden könnte, was insbesondere dann von Vorteil ist, wenn die Reibungskupplung 14 ohne Vorschaltung einer separaten Drehschwingungsdämpferanordnung 12 in einen Antriebsstrang zu integrieren ist.

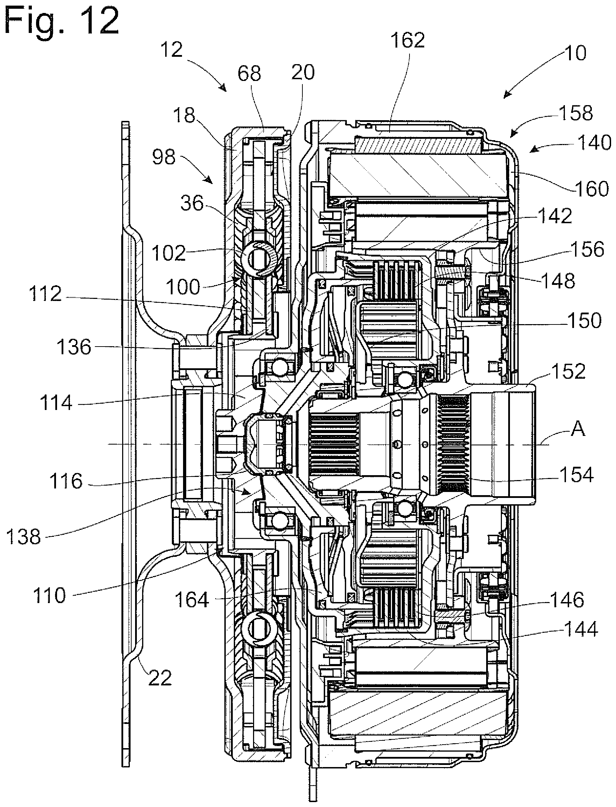

Eine weitere Ausgestaltungsvariante eines Antriebssystems ist in Fig. 12 dargestellt. Dieses Antriebssystem 10 umfasst eine Drehschwingungsdämpferanordnung 12, wie sie insbesondere hinsichtlich der Radialbewegungsfunktionalität vorangehend detailliert beschrieben ist. Man erkennt in Fig. 12, dass diese Drehschwingungsdämpferanordnung 12 zwei Drehschwingungsdämpfer 98, 100 in radialer Staffelung umfasst. Insbesondere sind hier auch die beiden mit der Nabe 114 fest verbundenen Deckscheibenelemente 112, 136 der Sekundärseite des radial inneren, zweiten Drehschwingungsdämpfers 100 erkennbar.

Die Nabe 114 ist vermittels der Hirthverzahnung 116 an den Eingangsbereich 138 eines Hybridantriebsmoduls 140 angebunden. Dieser Eingangsbereich 138 stellt gleichzeitig auch den Eingangsbereich einer als Lamellenkupplung ausgebildeten nasslaufenden Reibungskupplung 142 des Hybridantriebsmoduls 140 in Form eines im Wesentlichen fluiddicht abgeschlossenen Kupplungsgehäuses 144 bereit. Mit diesem Kupplungsgehäuse 144 sind die antriebsseitigen Reibelemente bzw. Lamellen 146 drehfest gekoppelt. Abtriebsseitige Reibelemente bzw. Lamellen 148 sind mit einem Lamellenträger 150 zur gemeinsamen Drehung um die Drehachse A gekoppelt. Dieser wiederum ist mit einem Abtriebsteil 152 des Hybridantriebsmoduls drehfest, welches durch eine Innenverzahnung 154 beispielsweise mit einer in dem Antriebsstrang folgenden Abtriebswelle gekoppelt werden kann.

Mit diesem Abtriebsteil 152 ist weiterhin eine Rotoranordnung 156 einer allgemein mit 158 bezeichneten Elektromaschine gekoppelt. Die Statoranordnung 160, welche die zur Erzeugung einer magnetischen Wechselwirkung erregbare Spulenanordnung umfasst, ist an einem Träger 162 fest gehalten, welcher in einem axial im Wesentlichen zwischen der Drehschwingungsdämpferanordnung 12 und dem Hybridmodul 140 liegenden Bereich nach radial innen greift und dort den Eingangsbereich 138 des Hybridmoduls 140 lagert.

Durch vermittels Fluidbeaufschlagung generierter Axialverschiebung eines Kupplungskolbens 164 können die antriebsseitigen und die abtriebsseitigen Lamellen 146 und 148 in Reibeingriff gebracht werden und somit der Einrückzustand der nasslaufenden Reibungskupplung 142 generiert werden. In diesem Zustand ist das Hybridantriebsmodul so geschaltet, dass der Antrieb über eine nicht dargestellte Brennkraftmaschine erfolgt. Die Elektromaschine 158 kann dabei beispielsweise zum Bereitstellen eines unterstützenden Drehmoments betrieben werden oder aber auch im Generatorbetrieb zum Speichern elektrischer Energie betrieben werden. Bei ausgerückter nasslaufender Reibungskupplung 142 ist das Abtriebsteil 152 von der Brennkraftmaschine entkoppelt. In diesem Zustand liefert das gesamte Antriebsdrehmoment die Elektromaschine 158, welche selbstverständlich im Schubzustand dann auch als Generator betreibbar ist.

Es wird abschließend darauf hingewiesen, dass selbstverständlich die in den Anwendungsbeispielen der Fig. 1 und 10 bis 12 dargestellten Drehschwingungsdämpferanordnungen 12 die verschiedenen insbesondere mit Bezug auf die Fig. 2 bis 9 detailliert erläuterten Ausgestaltungsformen aufweisen können.

Dabei ist es weiter selbstverständlich, dass verschiedene Ausgestaltungsspezialitäten dieser Varianten auch miteinander kombiniert werden können. So könnte beispielsweise auch bei Ausgestaltung der Drehschwingungsdämpferanordnung mit mehreren seriellen Drehschwingungsdämpfern zusätzlich eine oder ggf. mehrere Auslenkungsmassenanordnungen an der Sekundärseite beispielsweise des zweiten, also abtriebsseitig liegenden Drehschwingungsdämpfers, an der Primärseite des ersten, also antriebsseitigen Drehschwingungsdämpfers oder an der Zwischenmasse, welche im Wesentlichen die Sekundärseite des ersten und die Primärseite des zweiten Drehschwingungsdämpfers bereitstellt, vorgesehen sein, oder an mehreren dieser Baugruppen.

## Patentansprüche

1. Drehschwingungsdämpferanordnung, insbesondere für den Antriebsstrang eines Fahrzeugs, umfassend wenigstens einen Drehschwingungsdämpfer (98) mit einer Primärseite (16) und einer gegen die Wirkung einer Dämpferelementenanordnung (32) um eine Drehachse (A) bezüglich der Primärseite (16) drehbaren Sekundärseite (28), wobei die Dämpferelementenanordnung (32) wenigstens eine Dämpferelementeneinheit (54) umfasst und an der Primärseite (16) und der Sekundärseite (28) in Zuordnung zu jedem Umfangsendbereich (58, 60) jeder Dämpferelementeneinheit (54) Umfangsabstützbereiche (74, 34) vorgesehen sind und wobei an einer Seite (16) von Primärseite (16) und Sekundärseite (28) wenigstens bereichsweise entlang der wenigstens einen Dämpferelementeneinheit (54) sich in Umfangsrichtung erstreckend eine Radialabstützfläche (66) zur Radialabstützung der wenigstens einen Dämpferelementeneinheit (54) vorgesehen ist, wobei die Primärseite (16) und die Sekundärseite (28) bezüglich einander radial bewegbar sind und wobei wenigstens eine Dämpferelementeneinheit (54) in wenigstens einem ihrer Umfangsendbereiche (58, 60) an dem zugeordneten Umfangsabstützbereich der anderen Seite (28) von Primärseite (16) und Sekundärseite (28) gegen Radialverlagerung gehalten und in Radialabstand zur Radialabstützfläche (66) positioniert abgestützt oder abstützbar ist, wobei wenigstens eine Dämpferelementeneinheit (54) wenigstens eine Dämpferfeder (56) umfasst,
**dadurch gekennzeichnet, dass** in dem wenigstens einen Umfangsendbereich (58, 60) eine Dämpferfeder (56) über ein erstes Abstützelement (62) abgestützt oder abstützbar ist, wobei bei Abstützung an der anderen Seite (28) das erste Abstützelement (62) in Radialabstand (R) zur Radialabstützfläche (66) positioniert und gegen Radialverlagerung gehalten ist.

2. Drehschwingungsdämpferanordnung nach Anspruch 1, **dadurch gekennzeichnet, dass** der Radialabstand (R) bei zueinander koaxial positionierter Primärseite (16) und Sekundärseite (28) im Bereich von 0,2 bis 1,2 mm liegt.

3. Drehschwingungsdämpferanordnung nach Anspruch 1 oder 2, **dadurch gekennzeichnet, dass** der wenigstens eine Umfangsendbereich (58, 60) durch Formschluss gegen Radialverlagerung gehalten abgestützt oder abstützbar ist.

4. Drehschwingungsdämpferanordnung nach Anspruch 3, **dadurch gekennzeichnet, dass** an einer Baugruppe (28) von Dämpferelementeneinheit (54) und andere Seite (28) von Primärseite (16) und Sekundärseite (28) ein Radialhaltevorsprung (70) und an der anderen Baugruppe (54) eine den Radialhaltevorsprung (70) aufnehmende Radialhalteaussparung (72) vorgesehen sind.

5. Drehschwingungsdämpferanordnung nach einem der Ansprüche 1 bis 4,
**dadurch gekennzeichnet, dass** in dem wenigstens einen Umfangsendbereich (58, 60) eine Dämpferfeder (56) direkt an der anderen Seite (28) von Primärseite (16) und Sekundärseite (28) abgestützt oder abstützbar ist.

6. Drehschwingungsdämpferanordnung nach einem der Ansprüche 1 bis 5,
**dadurch gekennzeichnet, dass** wenigstens eine Dämpferelementeneinheit (54) eine Mehrzahl von in Umfangsrichtung aufeinander folgenden Dämpferfedern (56) umfasst, wobei in Umfangsrichtung unmittelbar aufeinander folgende Dämpferfedern (56) über ein an der Radialabstützfläche (66) radial abgestütztes oder abstützbares und in Umfangsrichtung entlang der Radialabstützfläche (66) bewegbares zweites Abstützelement aneinander abgestützt sind.

7. Drehschwingungsdämpferanordnung nach einem der Ansprüche 1 bis 6,
**dadurch gekennzeichnet, dass** zwei seriell zueinander wirksame Drehschwingungsdämpfer (98, 100) vorgesehen sind, wobei eine Sekundärseite (28) eines ersten (98) der Drehschwingungsdämpfer (98, 100) eine Primärseite (108) eines zweiten (100) der Drehschwingungsdämpfer (98, 100) bereitstellt oder damit verbunden ist, und wobei bei wenigstens einem der Drehschwingungsdämpfer (98, 100), vorzugsweise beiden Drehschwingungsdämpfern (98, 100), wenigstens ein Umfangsendbereich (58, 60) wenigstens einer Dämpferelementeneinheit (54) an dem zugeordneten Umfangsabstützbereich der jeweils anderen Seite (28) von Primärseite (16) und Sekundärseite (28) gegen Radialverlagerung gehalten und in Radialabstand (R) zur jeweiligen Radialabstützfläche (66) an der jeweiligen einen Seite (16) von Primärseite (16) und Sekundärseite (28) positioniert abgestützt oder abstützbar ist.

8. Drehschwingungsdämpferanordnung nach einem der Ansprüche 1 bis 7,
**dadurch gekennzeichnet, dass** die Primärseite (16) oder die Sekundärseite (28) zwei in Axialabstand zueinander angeordnete, miteinander fest verbundene Deckscheibenelemente (18, 20) umfasst und die Sekundärseite (28) oder die Primärseite (16), vorzugsweise die andere Seite (28) von Primärseite (16) und Sekundärseite (28), ein wenigstens bereichsweise zwischen den Deckscheibenelementen (18, 20) positioniertes Zentralscheibenelement (30) umfasst.

9. Drehschwingungsdämpferanordnung nach einem der Ansprüche 1 bis 8,
**dadurch gekennzeichnet, dass** an der Primärseite (16) oder/und der Sekundärseite (28) wenigstens eines Torsionsschwingungsdämpfers (98) wenigstens eine Auslenkungsmassenanordnung (76) mit wenigstens einer gegen die Rückstellkraftwirkung einer Federanordnung oder/und gegen die Fliehkraftwirkung aus einer Grund-Relativlage bezüglich eines Auslenkungsmassenträgers (86) auslenkbare Auslenkungsmasse (78) vorgesehen ist.

10. Drehschwingungsdämpfungsanordnung nach einem der Ansprüche 1 bis 9, **dadurch gekennzeichnet, dass** in einer Grund-Relativdrehlage der Primärseite und der Sekundärseite (28) bezüglich einander die wenigstens eine Dämpferelementeneinheit (54) der Dämpferelementenanordnung (32) nur bezüglich der Primärseite (16) oder nur bezüglich der Sekundärseite (28) abgestützt ist.

11. Antriebssystem für ein Fahrzeug, umfassend eine Drehschwingungsdämpferanordnung (12) nach einem der vorangehenden Ansprüche.

12. Antriebssystem nach Anspruch 11, **dadurch gekennzeichnet, dass** eine Primärseite (16) eines Drehschwingungsdämpfers (98) zur Ankopplung an ein Antriebsorgan (26) mit einem elastischen, vorzugsweise taumelelastischen, Verbindungselement (24) verbunden ist.

13. Antriebssystem nach Anspruch 11 oder 12, **dadurch gekennzeichnet, dass** die Sekundärseite (28) eines Drehschwingungsdämpfers (98) zur Ankopplung an ein Abtriebsorgan mit einem elastischen, vorzugsweise taumelelastischen, Verbindungselement verbunden ist.

14. Antriebssystem nach einem der Ansprüche 11 bis 13, **dadurch gekennzeichnet, dass** eine Sekundärseite (28) eines Drehschwingungsdämpfers (98) mit dem Eingangsbereich einer Reibungskupplung (40) verbunden ist.

15. Antriebssystem nach einem der Ansprüche 11 bis 13, **dadurch gekennzeichnet, dass** eine Sekundärseite (110) eines Drehschwingungsdämpfers (100) mit einem Eingangsbereich (138) eines Hybridantriebsmoduls (140) verbunden ist.

## Claims

1. Rotary vibration damper arrangement, in particular for the drive train of a vehicle, comprising at least one rotary vibration damper (98) with a primary side (16) and with a secondary side (28) which is rotatable relative to the primary side (16) about an axis of rotation (A) counter to the action of a damper element arrangement (32), wherein the damper element arrangement (32) comprises at least one damper element unit (54), and circumferential support regions (74, 34) are provided on the primary side (16) and on the secondary side (28) in a manner assigned to each circumferential end region (58, 60) of each damper element unit (54), and wherein, on one side (16) out of primary side (16) and secondary side (28), a radial support surface (66) is provided so as to extend at least regionally along the at least one damper element unit (54) in a circumferential direction, which radial support surface serves for radially supporting the at least one damper element unit (54), wherein the primary side (16) and the secondary side (28) are radially movable relative to one another, and wherein at least one damper element unit (54) is, in at least one of its circumferential end regions (58, 60), held on the associated circumferential support region of the other side (28) out of primary side (16) and secondary side (28) so as to be secured against radial displacement, and is or can be supported so as to be positioned with a radial spacing to the radial support surface (66), wherein at least one damper element unit (54) comprises at least one damper spring (56),
**characterized in that**, in the at least one circumferential end region (58, 60), a damper spring (56) is or can be supported by means of a first support element (62), wherein, in the case of support on the other side (28), the first support element (62) is held so as to be positioned with a radial spacing (R) to the radial support surface (66) and so as to be secured against radial displacement.

2. Rotary vibration damper arrangement according to Claim 1, **characterized in that** the radial spacing (R) lies in the range from 0.2 to 1.2 mm in the case of the primary side (16) and secondary side (28) being positioned coaxially with respect to one another.

3. Rotary vibration damper arrangement according to Claim 1 or 2, **characterized in that** the at least one circumferential end region (58, 60) is supported or supportable, so as to be held secured against radial displacement, by positive locking.

4. Rotary vibration damper arrangement according to Claim 3, **characterized in that** a radial holding projection (70) is provided on one assembly (28) of the damper element unit (54) and on the other side (28) out of primary side (16) and secondary side (28), and a radial holding aperture (72) which receives the radial holding projection (70) is provided on the other assembly (54).

5. Rotary vibration damper arrangement according to one of Claims 1 to 4, **characterized in that**, in the at least one circumferential end region (58, 60), a damper spring (56) is supported or supportable directly on the other side (28) out of primary side (16) and secondary side (28).

6. Rotary vibration damper arrangement according to one of Claims 1 to 5, **characterized in that** at least one damper element unit (54) comprises a multiplicity of damper springs (56) arranged in succession in a circumferential direction, wherein damper springs (56) arranged in direct succession in the circumferential direction are supported on one another via a second support element which is radially supported or supportable on the radial support surface (66) and which is movable in the circumferential direction along the radial support surface (66).

7. Rotary vibration damper arrangement according to one of Claims 1 to 6, **characterized in that** two rotary vibration dampers (98, 100) are provided which act in series with respect to one another, wherein a secondary side (28) of a first (98) of the rotary vibration dampers (98, 100) provides or is connected to a primary side (108) of a second (100) of the rotary vibration dampers (98, 100), and wherein, in the case of at least one of the rotary vibration dampers (98, 100), preferably both rotary vibration dampers (98, 100), at least one circumferential end region (58, 60) of at least one damper element unit (54) is held on the associated circumferential support region of the respective other side (28) out of primary side (16) and secondary side (28) so as to be secured against radial displacement and is supported or supportable so as to be positioned with a radial spacing (R) to the respective radial support surface (66) on the respective one side (16) out of primary side (16) and secondary side (28).

8. Rotary vibration damper arrangement according to one of Claims 1 to 7, **characterized in that** the primary side (16) or the secondary side (28) comprises two cover disk elements (18, 20) which are arranged with an axial spacing to one another and which are fixedly connected to one another, and the secondary side (28) or the primary side (16), preferably the other side (28) out of primary side (16) and secondary side (28), comprises a central disk element (30) which is positioned at least regionally between the cover disk elements (18, 20).

9. Rotary vibration damper arrangement according to one of Claims 1 to 8, **characterized in that**, on the primary side (16) and/or on the secondary side (28) of at least one torsional vibration damper (98), there is provided at least one deflection mass arrangement (76) with at least one deflection mass (78), which is deflectable out of a basic relative position with respect to a deflection mass carrier (86) counter to the restoring force action of a spring arrangement and/or counter to the centrifugal force action.

10. Rotary vibration damping arrangement according to one of Claims 1 to 9, **characterized in that**, in a basic relative rotational position of the primary side and of the secondary side (28) with respect to one another, the at least one damper element unit (54) of the damper element arrangement (32) is supported only with respect to the primary side (16) or only with respect to the secondary side (28) .

11. Drive system for a vehicle, comprising a rotary vibration damper arrangement (12) according to one of the preceding claims.

12. Drive system according to Claim 11, **characterized in that** a primary side (16) of a rotary vibration damper (98) is, for the purposes of coupling to a drive member (26), connected to an elastic connecting element (24), preferably a connecting element (24) which is elastic in terms of wobbling movements.

13. Drive system according to Claim 11 or 12, **characterized in that** the secondary side (28) of a rotary vibration damper (98) is, for the purposes of coupling to an output member, connected to an elastic connecting element, preferably a connecting element which is elastic in terms of wobbling movements.

14. Drive system according to one of Claims 11 to 13, **characterized in that** a secondary side (28) of a rotary vibration damper (98) is connected to the input region of a friction clutch (40).

15. Drive system according to one of Claims 11 to 13, **characterized in that** a secondary side (110) of a rotary vibration damper (100) is connected to an input region (138) of a hybrid drive module (140).

## Revendications

1. Ensemble amortisseur d'oscillations de torsion, en particulier pour la chaîne cinématique d'un véhicule, comprenant au moins un amortisseur d'oscillations de torsion (98) avec un côté primaire (16) et un côté secondaire (28) pouvant tourner autour d'un axe de rotation (A) par rapport au côté primaire (16) à l'encontre de l'action d'un ensemble d'élément amortisseur (32), l'ensemble d'élément amortisseur (32) présentant au moins une unité d'élément amortisseur (54) et des régions d'appui périphériques (74, 34) étant prévues au niveau du côté primaire (16) et du côté secondaire (28) en association avec chaque région d'extrémité périphérique (58, 60) de chaque unité d'élément amortisseur (54), et une surface d'appui radiale (66), s'étendant dans la direction périphérique pour l'appui radial de l'au moins une unité d'élément amortisseur (54), étant prévue au niveau d'un côté (16) du côté primaire (16) et du côté secondaire (28) au moins en partie le long de l'au moins une unité d'élément amortisseur (54), le côté primaire (16) et le côté secondaire (28) pouvant être déplacés radialement l'un par rapport à l'autre et au moins une unité d'élément amortisseur (54) étant retenue contre un déplacement radial dans au moins l'une de ses régions d'extrémité périphériques (58, 60) contre la région d'appui périphérique associée de l'autre côté (28) du côté primaire (16) et du côté secondaire (28) et étant supportée ou pouvant être supportée de manière positionnée à distance radiale par rapport à la surface d'appui radiale (66), au moins une unité d'élément amortisseur (54) comprenant au moins un ressort amortisseur (56),
**caractérisé en ce que** dans l'au moins une région d'extrémité périphérique (58, 60), un ressort amortisseur (56) est supporté ou peut être supporté par le biais d'un premier élément d'appui (62), lors de l'appui contre l'autre côté (28), le premier élément d'appui (62) étant positionné à distance radiale (R) de la surface d'appui radiale (66) et étant retenu contre tout déplacement radial.

2. Ensemble amortisseur d'oscillations de torsion selon la revendication 1, **caractérisé en ce que** la distance radiale (R) lorsque le côté primaire (16) et le côté secondaire (28) sont positionnés coaxialement l'un par rapport à l'autre est comprise dans une plage de 0,2 à 1,2 mm.

3. Ensemble amortisseur d'oscillations de torsion selon la revendication 1 ou 2, **caractérisé en ce que** l'au moins une région d'extrémité périphérique (58, 60) est supportée ou peut être supportée de manière retenue par engagement par correspondance de formes contre un déplacement radial.

4. Ensemble amortisseur d'oscillations de torsion selon la revendication 3, **caractérisé en ce qu'**au niveau d'un module (28) de l'unité d'élément amortisseur (54) et de l'autre côté (28) du côté primaire (16) et du côté secondaire (28), est prévue une saillie de retenue radiale (70) et au niveau de l'autre module (54) est prévu un évidement de retenue radial (72) recevant la saillie de retenue radiale (70).

5. Ensemble amortisseur d'oscillations de torsion selon l'une quelconque des revendications 1 à 4, **caractérisé en ce que** dans l'au moins une région d'extrémité périphérique (58, 60), un ressort amortisseur (56) est supporté ou peut être supporté directement contre l'autre côté (28) du côté primaire (16) et du côté secondaire (28).

6. Ensemble amortisseur d'oscillations de torsion selon l'une quelconque des revendications 1 à 5, **caractérisé en ce qu'**au moins une unité d'élément amortisseur (54) comprend une pluralité de ressorts amortisseurs (56) successifs dans la direction périphérique, des ressorts amortisseurs (56) immédiatement successifs dans la direction périphérique étant supportés les uns contre les autres par le biais d'un deuxième élément d'appui supporté ou pouvant être supporté radialement sur la surface d'appui radiale (66) et déplaçable dans la direction périphérique le long de la surface d'appui radiale (66).

7. Ensemble amortisseur d'oscillations de torsion selon l'une quelconque des revendications 1 à 6, **caractérisé en ce que** deux amortisseurs d'oscillations de torsion agissant en série l'un par rapport à l'autre (98, 100) sont prévus, un côté secondaire (28) d'un premier (98) des amortisseurs d'oscillations de torsion (98, 100) fournissant un côté primaire (108) d'un deuxième (100) des amortisseurs d'oscillations de torsion (98, 100) ou étant connecté à celui-ci, et, dans le cas d'au moins l'un des amortisseurs d'oscillations de torsion (98, 100), de préférence dans le cas des deux amortisseurs d'oscillations de torsion (98, 100), au moins une région d'extrémité périphérique (58, 60) d'au moins une unité d'élément amortisseur (54) étant retenue contre un déplacement radial au niveau de la région d'appui périphérique associée de l'autre côté respectif (28) du côté primaire (16) et du côté secondaire (28) et étant supportée ou pouvant être supportée de manière positionnée à distance radiale (R) par rapport à la surface d'appui radiale respective (66) contre le côté respectif (16) du côté primaire (16) et du côté secondaire (28) .

8. Ensemble amortisseur d'oscillations de torsion selon l'une quelconque des revendications 1 à 7, **caractérisé en ce que** le côté primaire (16) ou le côté secondaire (28) comprend deux éléments de disque de recouvrement (18, 20) connectés fixement l'un à l'autre, disposés à distance axiale l'un de l'autre, et le côté secondaire (28) ou le côté primaire (16), de préférence l'autre côté (28) du côté primaire (16) et du côté secondaire (28), comprend un élément de disque central (30) positionné au moins en partie entre les éléments de disque de recouvrement (18, 20).

9. Ensemble amortisseur d'oscillations de torsion selon l'une quelconque des revendications 1 à 8, **caractérisé en ce qu'**au niveau du côté primaire (16) et/ou du côté secondaire (28) d'au moins un amortisseur d'oscillations de torsion (98), est prévu au moins un agencement de masse de déviation (76) avec au moins une masse de déviation (78) pouvant être déviée à l'encontre de l'action de la force de rappel d'un agencement de ressort et/ou à l'encontre de l'action de la force centrifuge depuis une position relative de base par rapport à un support de masse de déviation (86).

10. Ensemble d'amortissement d'oscillations de torsion selon l'une quelconque des revendications 1 à 9, **caractérisé en ce que** dans une position de rotation relative de base du côté primaire et du côté secondaire (28) l'un par rapport à l'autre, l'au moins une unité d'élément amortisseur (54) de l'ensemble d'éléments amortisseur (32) est seulement supportée par rapport au côté primaire (16) ou seulement par rapport au côté secondaire (28) .

11. Système d'entraînement pour un véhicule, comprenant un ensemble amortisseur d'oscillations de torsion (12) selon l'une quelconque des revendications précédentes.

12. Système d'entraînement selon la revendication 11, **caractérisé en ce qu'**un côté primaire (16) d'un amortisseur d'oscillations de torsion (98), pour l'accouplement à un organe d'entraînement (26), est connecté à un élément de liaison élastique (24), de préférence élastique en rotation.

13. Système d'entraînement selon la revendication 11 ou 12, **caractérisé en ce que** le côté secondaire (28) d'un amortisseur d'oscillations de torsion (98), pour l'accouplement à un organe de prise de force, est connecté à un élément de liaison élastique, de préférence élastique en rotation.

14. Système d'entraînement selon l'une quelconque des revendications 11 à 13, **caractérisé en ce qu'**un côté secondaire (28) d'un amortisseur d'oscillations de torsion (98) est connecté à la région d'entrée d'un embrayage à friction (40).

15. Système d'entraînement selon l'une quelconque des revendications 11 à 13, **caractérisé en ce qu'**un côté secondaire (110) d'un amortisseur d'oscillations de torsion (100) est connecté à une région d'entrée (138) d'un module d'entraînement hybride (140) .
